# EUROPÄISCHE PATENTANMELDUNG

(11) **EP 3 501 674 A1**
(43) Veröffentlichungstag der Anmeldung: **26.06.2019**
(21) Anmeldenummer: 18213660.6
(22) Anmeldetag: 18.12.2018
(51) Int. Cl.: B08B 9/043, B08B 9/053, B08B 9/049, F16L 55/30

(54) **VERFAHREN UND ZUGVORRICHTUNG ZUR REINIGUNG UND/ODER INSPEKTION VON GERADEN UND GEBOGENEN LÜFTUNGSROHRLEITUNGEN VON LÜFTUNGS- ODER KLIMAANLAGEN**

(30) Priorität: 19.12.2017 DE 102017011785
(71) Anmelder: Danilov, Andrey, 49809 Lingen (Ems) (DE); Fielers, Frank, 49808 Lingen (Ems) (DE)
(72) Erfinder: Danilov, Andrey, 49809 Lingen (Ems) (DE); Fielers, Frank, 49808 Lingen (Ems) (DE)
(74) Vertreter: Tarvenkorn, Oliver

(57) **Zusammenfassung**

Verfahren zur Reinigung und/oder Inspektion von geraden und gebogenen Lüftungsrohrleitungen (1, 2, 3) von Lüftungs- oder Klimaanlagen, mit wenigstens folgenden Schritten:
a) Bereitstellung und Festlegung wenigstens einer Zugschnur (62) an einem Rohrende;
b) Durchziehen der Zugschnur (62) durch die Lüftungsrohrleitung (1, 2, 3) bis zu dem jeweils anderen Rohrende, unter Verwendung einer Zugvorrichtung (100, 100') mit wenigstens einer Vortriebseinheit (10), wobei die Lüftungsrohrleitung (1, 2, 3) von der Zugvorrichtung (100, 100') durchquert wird und die Zugschnur (62) nachgeschleppt wird;
c) Entnahme der Zugvorrichtung (100, 100') aus der Lüftungsrohrleitung (1, 2, 3) und Verbinden der Zugschnur (62) mit einer Reinigungsvorrichtung (200) mit wenigstens einem Reinigungskörper (203, 204) an dem als Startpunkt gewählten Rohrende;
d) Zurückziehen der mit der Reinigungsvorrichtung (200) verbundenen Zugschnur (62) vom Startpunkt aus bis zum jeweils anderen Rohrende.

## Beschreibung

Die Erfindung betrifft ein Verfahren zur Reinigung und Inspektion von geraden und gebogenen Lüftungsrohrleitungen von Lüftungs- oder Klimaanlagen.. Weiter betrifft die Erfindung eine zur Durchführung des Verfahrens besonders geeignete Zugvorrichtung.

Bauherren entscheiden sich immer öfter für den Einbau von Lüftungs- oder Klimaanlagen. Die modernen Lüftungsanlagen sorgen nicht nur für ein angenehmes Raumklima, sondern auch für das Einsparen von Energie, und spielen somit auch finanziell eine Rolle. Beim Betrieb einer solchen Anlage sammeln sich Schmutze, wie Fette, Insektenreste, Staub im Inneren der Rohre. Dabei können diese Ablagerungen in den Rohren eine Grundlage für Keimwachstum darstellen. Die Ablagerungen führen auch zur Erhöhung des Luftflusswiderstandes, wodurch die Effizienz des Systems beeinträchtigt wird. Um einen betriebsfähigen und hygienischen Zustand einer Lüftungs- oder Klimaanlage zu gewährleisten, müssen diese Rohre der Anlage regelmäßig gereinigt werden. Eine besondere Herausforderung stellen die flexiblen Rohre dar, die oft mit vielen Bögen verlegt sind, relativ kleine Durchmesser und keinen runden Querschnitt haben können.

Aus der Praxis sind bereits verschiedene Lösungsansätze zur Reinigung und Inspektion von Rohren von Lüftungs- oder Klimaanlagen in Gebäuden bekannt.

In einzelnen Fällen können Rohrelemente ausgebaut und gereinigt werden. Diese Möglichkeit besteht aber nur dann, wenn die Rohre leicht zugänglich sind. In vielen Fällen liegen die Rohre in den Wänden und in den Decken, so dass der Aus- und Wiedereinbau zu Reinigungszwecken sehr aufwendig oder nicht möglich ist.

Eine mechanische Bürstenreinigung ist ein weiteres bekanntes Verfahren. Dabei wird die Reinigungsbürste rotierend durch das Lüftungsrohr verschoben. Die Rotation und Verschiebung der Bürste erfolgt durch eine flexible Welle, welche mit einem Rotations- oder Druckluftantrieb von außerhalb der Rohre angetrieben wird. Die gelösten Verschmutzungen werden von einer Seite des Rohres abgesaugt. Anstelle der Bürsten können auch Mikrofasersterne verwendet werden. Sie können sowohl trocken als auch feucht eingesetzt werden.

Ein weiteres bekanntes Verfahren ist die Druckluftreinigung. Dabei wird ein Düsenkopf verwendet, der den Staub durch einen Luftstrom von der Rohrwandung ablöst und aufwirbelt. Die abgelösten Verschmutzungen werden durch das Absaugen aus dem Rohr entfernt. Um den Reinigungsgrad zu erhöhen, werden auch kombinierte Reinigungsköpfe mit Düsenkopf und Bürste eingesetzt.

Nachteilig bei der Bürsten- und Druckluftreinigung ist der große Zeitaufwand, der wiederum mit größeren Personalkosten verbunden ist, sogar für eine einfache Staubentfernung zum Beispiel nach der Bauphase. Außerdem ist das Durchführen der Mikrofasersterne, der Bürsten- oder Düsenkopfes durch das ganze Rohr und das Erzeugen vom ausreichenden Unterdruck für die Staubabsaugung im ganzen Rohr nicht immer problemlos möglich.

Aus dem Patent DE 10 2016 106 253 B3 ist ein Lüftungsrohrreinigungsgerät bekannt, welches die Reinigung mit Bürsten und mit Reinigungsfluid realisiert. Das Verfahren des Gerätes wird durch eine Propellereinheit ermöglicht. Das Durchfliegen von flexiblen Rohren, welche gewöhnlich mit vielen Bögen verlegt sind, wird für die Vorrichtung problematisch oder unmöglich. Insbesondere kann die Vorrichtung nicht in den üblichen engen Nennweiten von Lüftungsrohrleitungen von Gebäudelüftungssystemen von meist nicht mehr als etwa 100 mm eingesetzt werden

Es ist daher die Aufgabe der vorliegenden Erfindung, ein Verfahren und eine geeignete Vorrichtung zur Reinigung und Inspektion von Rohren mit kleinem Durchmesser bereitzustellen, wie sie im Hauslüftungsbereich üblich sind, also insbesondere mit einem Innendurchmesser von 63 mm oder 75 mm, um für diese eine einfache und kostengünstige Reinigungs- und Inspektionsabwicklung zu ermöglichen. Insbesondere soll die vorliegende Erfindung in der Lage sein, auch flexible, komplex verlegte und unrunde Rohre zu inspizieren und zu reinigen.

Gelöst wird diese Aufgabe durch ein Verfahren mit den Merkmalen des Anspruchs 1.

Die Inspektions- und Reinigungsvorrichtungen werden nach der Erfindung mit Hilfe einer vorher im Lüftungsrohr verlegten Zugschnur durchgezogen. Durch die Zugschnur kann genügend Zugkraft auf das jeweilige Inspektions- oder Reinigungsgerät übertragen werden, um dieses durch das Lüftungsrohr zu bewegen.

Das Verlegen der Zugschnur im Lüftungsrohr wird mit Hilfe einer Zugvorrichtung gelöst. Hierzu ist eine zur Durchführung des Verfahrens geeignete Zugvorrichtung in Anspruch 9 angegeben.

Die Zugvorrichtung wird entweder über Antriebselemente, die die Innenwandung kontaktieren, vorwärtsbewegt oder sie ist als Flugvorrichtung mit wenigstens einem Propellerantrieb ausgebildet.

Durch die Ausbildung als Gliederzug ist die Zugvorrichtung wendig genug, um das Lüftungsrohr zu Durchfliegen und dabei zugleich mindestens eine leichte Zugschnur als sogenannte Leitschnur durch das Lüftungsrohr zu ziehen. Über die Leitschnur wird die eigentliche Zugschnur eingezogen.

Zur Fortbewegung der Inspektions- und Reinigungsgeräte können durch die Zugschnur große Kräfte angelegt werden. Dadurch können auch komplexe Reinigungs- und Inspektionsgeräte eingesetzt werden.

Das Verfahren erlaubt es, die Inspektion und Reinigung je nach Bedarf flexibel zu kombinieren. Zum Beispiel können folgende Wartungsarbeiten durchgeführt werden:
Eine leichtere Reinigung kann in zwei Schritten durchgeführt werden:
- Das schnelle Verlegen der Zugschnur mit Hilfe des fliegenden Vorschubgerätes.
- Die Reinigungsvorrichtung, also der sogenannte Molch, der z. B. mit einem Lappen oder einem textilen Überzug versehen sein kann, wird an die Zugvorrichtung angebunden und durch das Lüftungsrohr gezogen. Die Verschmutzung des Lappens zeigt, ob eine weitere Reinigung notwendig ist.

Diese Reinigung kann sehr schnell und kostengünstig durchgeführt werden. Dabei kann ein großer Teil des Staubes entfernt werden. Eine solche Reinigung kann zum Beispiel im Neubau nach dem Bauschluss durchgeführt werden, um Baustaub zu entfernen.

Eine gründliche Reinigung kann in folgenden Schritten durchgeführt werden.
- Das Verlegen einer Leitschnur erfolgt mit Hilfe der Zugvorrichtung.
- Die Leitschnur wird durch eine passende Zugschnur für eine weitere Reinigung ausgetauscht.
- Die Reinigungsvorrichtung mit den angetriebenen Bürsten und der Reinigungsflüssigkeitszufuhr und -abfuhr wird mit Hilfe der verlegten Zugschnur durch das Lüftungsrohr gezogen.

Diese Reinigung ist aufwendiger, erlaubt es aber, Ablagerungen in Rohrleitungen gründlich zu entfernen.

Die Zugvorrichtung wie auch das evtl. damit gekoppelte Inspektions- oder Reinigungsgerät können jeweils aus mehreren Einheiten bestehen, insbesondere die Elektronikeinheit mit Steuerungselektronik, Akku-Einheit mit Akkuzellen, etc. Die Einheiten werden jeweils durch eine flexible Kupplung verbunden und bilden einen Gliederzug aus. Die Teilung der Einheiten verbessert die Passage- und Bogengängigkeit der Vorrichtungen.

Die einzelnen Einheiten, die zu einem Gliederzug kombiniert werden, welcher die Zugvorrichtung nach der Erfindung bildet, können einige Führungselemente besitzen, um die Zugvorrichtung in einer entsprechenden Position zu halten und damit die Passage- und Bogengängigkeit des Gerätes entlang des Rohres zu erhöhen. Die Führungselemente können mit oder ohne kleine Räder oder mit Gleitkufen ausgeführt werden.

Damit eine Beschädigung des Rohres durch das Ziehen der Zugschnur vermieden wird, können zusätzliche Schutzelemente an der Zugschnur angebracht werden. Insbesondere kann eine weiche oder gut gleitende Beschichtung um die Zugschnur angebracht werden, um die Rohrflache zu schützen. Oder es können Abstandhalter in einem bestimmten Abstand zueinander eingesetzt werden, die mit Rädern aus einem weichen Material versehen sind, oder die aus einem gut gleitenden Material gebildet sind.

Die Zugschnur kann auch als Drahtbündel oder Kabel für Informations- und Energieübertragung zwischen der Zugvorrichtung und ggf. der weiteren Inspektions- und Reinigungseinheiten und einem Steuergerät benutzt werden, welches sich außerhalb des Lüftungsrohres befindet. Alternativ kann die Energieversorgung mit Hilfe der Akkuzellen und die Informationsübertragung mit Hilfe kabelloser Verbindungen realisiert werden.

Die Zugschnur kann manuell oder automatisch von einem Ende oder beiden Enden des Rohres gezogen werden. Eine automatische Zugschnurbewegung ist besonders wichtig für den Reinigungsvorgang. Mit zwei automatischen Zugvorrichtungen auf beiden Seiten des Rohres können komplexe Reinigungsprogramme mit mehreren Wiederholungen von Vorwärts- und Rückwärtsbewegungen durchgeführt werden. Die Zugvorrichtungen auf den verschiedenen Rohrseiten können über Kabelverbindungen oder kabellosen Verbindungen synchronisiert werden.

Es kann auch eine federbeaufschlagte Rolle auf einer Seite des Lüftungsrohres eingesetzt werden, um die Rückholung der Schnüre zu erleichtern. Diese Lösung vereinfacht den Aufbau des gesamten Systems wesentlich.

Die Position der Zugvorrichtung in dem Lüftungsrohr kann durch ein Hodometer in oder an dem Gerät, durch Markierungen auf der Zugschnur und durch den elektronischen oder mechanischen Schnurzähler bestimmt werden.

Die Inspektion und der Reinigungsverlauf können folgende Schritte umfassen:
- Verlegen der Zugschnur
- Inspektion
- Reinigung

Je nach Bedarf können einzelne Schritte wiederholt oder übersprungen werden. Die Schritte: Verlegung der Zugschnur, Inspektion und Reinigung können auch miteinander kombiniert werden.

Insbesondere können die Verlegung der Zugschnur und die Inspektion gleichzeitig durchgeführt werden.

Das Verlegen der Zugschnur wird vorzugsweise mit Hilfe einer propellergetriebenen Flugvorrichtung erledigt. Diese ist als ein selbstfliegendes Gerät ausgebildet.

Besonders vorteilhaft ist es, das Lüftungsrohr mit einer propellergetriebenen Flugvorrichtung zu durchfliegen, weil das Lüftungsrohr einen guten Strömungskanal bildet. Der Staudruck kann noch erhöht und der Vortrieb verbessert werden, indem das rückwärtige Rohrende hinter der fliegenden Zugvorrichtung - in Zugrichtung gesehen - temporär verschlossen wird.

"Fliegen" bedeutet im Sinne der vorliegenden Erfindung keinen freien Flug, sondern eine durch die Rohrwandungen abgestützte Bewegung entlang der Rohrleitung, bei der mittels des Propellers der Vortrieb erzeugt wird. Der besondere Vorteil liegt darin, dass kein dauerhafter Kontakt von Antriebselementen zur Rohrwandung an mehreren Punkten gleichzeitig gehalten werden muss. Die gesamte Zugvorrichtung kann damit schlanker und dadurch wiederum leichtgängiger ausgebildet werden.

Die Flugvorrichtung kann mit einem oder mehreren hintereinanderstehenden Propellern ausgeführt werden. Bei mehreren Propellern wird bevorzugt jeder Propeller separat gesteuert. Dadurch kann das Gesamtdrehmoment der Antriebsvorrichtung entsprechend verändert werden. Zum Beispiel kann durch eine gegenläufige Rotation von zwei oder mehreren Propellern das Gesamtdrehmoment minimiert werden und somit ein ruhiger Gerätelauf begünstigt werden. Und umgekehrt kann durch die Variation des Drehmomentverhältnisses zwischen den Propellern eine Vorzeichenänderung des Gesamtdrehmomentes erzielt werden. Dadurch wird eine Vibration oder eine Drehung des Gerätes erzeugt. Die Vibrationen und Drehungen können benutzt werden, um die Fortbewegung zu begünstigen oder ein besseres Reinigungsergebnis für ein kombiniertes Vorschub-Reinigungsgerät zu erzielen. Besonders gilt dies für unrunde Rohre.

Der durch das fliegende Gerät erzeugte Luftstrom kann benutzt werden, um Staub vom Rohr zu entfernen. Um die Wirkung zu erhöhen, kann die Flugvorrichtung mit Hilfe der Zugschnur angehalten werden.

Die vom Propeller beschleunigte Luft kann teilweise auf die Wand gerichtet werden, um eine Abstoßkraft zu erzeugen und dadurch Reibung mit der Rohrwandung zu reduzieren.

Um die Bewegung von einem mit Propellerantrieb bewegten Vorschubgerät zu begünstigen, können ein oder mehrere Enden des Rohres mit einem oder mehreren Deckeln mindestens teilweise aber auch ganz verschlossen werden. Dadurch entsteht ein höherer Überdruck hinter dem Gerät bei geschlossenem Ende hinter der Flugvorrichtung oder ein höherer Unterdruck vor dem Gerät, bei geschlossenem Ende vor dem der Flugvorrichtung. Die dadurch erhöhte Druckdifferenz begünstigt die Fortbewegung. Dabei können die Deckel Löcher für Kabel, Schläuche oder Zugschnüre haben. Falls ein vollständiges Durchfliegen nicht möglich ist, kann die Flugvorrichtung mit der Leit- oder Zugschnur rückwärts herausausgezogen werden.

Nach dem Durchfliegen der Flugvorrichtung durch das Lüftungsrohr kann die Flugvorrichtung von der Zugschnur abgetrennt werden. Die eingezogene Zugschnur wird entweder zum Verlegen einer anderen Zugschnur oder direkt zum Durchziehen eines Inspektions- und/oder Reinigungsgerätes benutzt.

Beim Verlegen der Zugschnur wird bevorzugt zunächst eine leichtere Zugschnur benutzt, die als Leitschnur bezeichnet wird. Die Leitschnur kann ein geringeres Gewicht pro Meter Länge besitzen als die für die spätere Reinigung notwendige schwere Zugschnur. Damit wird das erste Durchfliegen der Lüftungsrohrleitung erleichtert, und es kann eine entsprechend kleine Flugvorrichtung eingesetzt werden. Vorzugsweise wird die Flugvorrichtung auf eine Nutzkraft von weniger als 10 N ausgelegt werden, damit sie möglichst leicht ist und wenig Energie benötigt. Die für die Reinigung erforderliche schwere Zugschnur wird mit einem Ende mit der bereits verlegten Leitschnur verbunden und über diese in die Lüftungsrohrleitung eingezogen, bis sie am anderen Ende heraustritt.

Nach dem Durchfliegen der Flugvorrichtung durch das Lüftungsrohr kann die neue Zugschnur oder ein anderes Gerät direkt an die Flugvorrichtung angebunden werden. Die Flugvorrichtung wird mit der angebundenen Zugschnur oder einem angebundenen Gerät durch das Lüftungsrohr zurückgezogen.

Die Zugvorrichtung kann zudem auf folgenden Antriebsprinzipien basieren:
- Axial in Längserstreckung des Rohrs ausgerichtete Räder;
- spiralförmig bewegte Räder. Die Räder stehen mit einem Winkel zu Rohrachse;
- Bandrollen.

Weil das Vorschubgerät nur kleine Zugkräfte erzeugen muss, um die Zugschnur zu verlegen, kann die Vorbewegung mit Hilfe außerdem eines Vibrationsantriebes erzeugt werden. Dabei muss sich der vibrierende Teil des Gerätes mit Beinen oder Bürsten an der Wand stützen. Die Beine oder die Bürstenhaare sollen vorzugsweise in eine Richtung geneigt sein. Dabei wird die Basis von den Beinen oder den Bürstenhaaren am Gerät weiter nach vorne geschoben. Die Vibration des Gerätes erzeugt, dass sich die Beine oder die Bürstenhaare biegen und durch deren Ausrichtung das Gerät nach vorne bewegt. Durch die Bewegung der Bürsten oder der Beine werden auch die Ablagerungen von der Wand abgelöst. Dabei wird eine weitere Reinigung erleichtert.

Die Inspektions- und Reinigungsgeräte werden mit der Zugschnur verbunden und axial entlang des Rohres bewegt. Dabei wird, falls es notwendig ist, eine zusätzliche Zugschnur an das Gerät angebunden, die Zugschnur zieht das Gerät hinter sich her. Die neu verlegte Schnur kann benutzt werden, um das Gerät auch rückwärts zu bewegen. Außerdem dient sie als Zugschnur für nachfolgende Schritte.

Das Inspektionsgerät kann mit einer oder mehreren statischen oder beweglichen Kameras und verschiedenen Sensoren ausgestattet werden. Insbesondere kann das Gerät die Sensoren für Lufttemperaturmessung, Feuchtigkeitsmessung, Beschleunigungsmessung, Akustikmessung und Hodometer tragen. Die Kameras auf dem Inspektionsgerät können in verschiedenen Spektralbereichen arbeiten. Zum Beispiel können Kameras zusammen in sichtbaren und infraroten Spektralbereichen benutzt werden. Infrarotaufnahmen können besonderes hilfreich sein, um Kältebrücken zu entdecken.

Das Inspektionsgerät kann auch ein oder mehrere Lichtquellen haben, welche auch verschiedene Spektraleigenschaften haben können. Die installierten Lichtquellen können an- oder ausgeschaltet werden. Des Weiteren können die spektral programmierbaren Lichtquellen angepasst werden, um eine bessere Bildqualität zu bekommen oder ausgewählte Befunde deutlicher darzustellen.

Das Inspektionsgerät kann in der Rohrleitung angehalten werden, um bessere Kameraaufnahmen zu bekommen oder eine Langzeitmessung durchzuführen.

Die Daten von den Sensoren können benutzt werden, um verschiedene Analysen vom Rohraufbau durchzuführen. Insbesondere kann auf der Basis des Beschleunigungsverlaufes der möglicherweise unbekannte räumliche Verlauf der Rohre im Gebäude rekonstruiert werden. Auf der Basis von Lufttemperatur- und Feuchtigkeitsdaten kann man nach Stellen suchen, die für eine Schimmelbildung anfällig sind.

Das Inspektionsgerät kann einen Auslenkungssensor oder einen Winkelsensor umfassen, um die Auslenkung der einzelnen Einheiten zueinander zu bestimmen. Von der Auslenkungsgröße kann man auf den Radius des Rohrbogens schließen.

Das Inspektionsgerät kann verschiedene Indikationstreifen haben, die beim Durchführen der Rohre die Rohroberfläche berühren und die Ablagerungen von der Rohroberfläche sammeln. Im einfachen Fall könnte ein weißer Lappen benutzt werden. Die Verschmutzung des Lappens deutet nach der Inspektion auf den Verschmutzungsgrad des Rohres hin.

Ein geeignetes Reinigungsgerät muss ein oder mehrere Reinigungselemente enthalten, wie Bürsten, Lappen oder Schaumkörper. Die Reinigungsvorrichtung kann angetriebene, vibrierende oder rotierende Reinigungselemente oder nicht angetriebene Reinigungselemente haben. In dem Reinigungsgerät können eine oder mehrere, um die Rohrachse rotierende Reinigungselemente benutzt werden. Beim Einsatz von mehreren, sich in verschiedene Richtungen um die Rohrachse ausdehnenden Reinigungselementen kann ein ruhigerer Gerätverlauf erzielt werden.

Durch die Variation der Drehgeschwindigkeiten der Reinigungselemente kann eine seitliche Bewegung des Gerätes erzeugt werden. Dadurch werden besonders die Reinigungsergebnisse der nichtrunden Rohre verbessert. Beim Einsatz mehrerer Reinigungselemente reicht es, eine Differenz der Drehgeschwindigkeit der sich in Gegenrichtung drehenden Reinigungselemente zu erzeugen. Dadurch wird eine seitliche Bewegung in beide Richtungen erzeugen. Beim Einsatz eines drehenden Reinigungselements muss die Drehrichtung kontinuierlich geändert werden, um eine seitliche Verschiebung des Gerätes zu erzeugen. Die Verschiebungen können durch die eingebaute Elektronik gesteuert werden, die durch die kontinuierliche Variation der Drehgeschwindigkeit der Reinigungselemente die Geräteverschiebung erzeugt.

Die Reinigungsvorrichtung kann eine Düse für die Reinigungsfluidzufuhr und ein Absaugelement zum Abführen des Reinigungsfluides umfassen. Das Reinigungsfluid kann durch die hinter dem Gerät gezogenen Schläuche transportiert werden. An die Schläuche können die Pumpen für die Zufuhr und Abfuhr des Reinigungsfluides installiert werden.

Die Elemente des Vorschub, Inspektions- und Reinigungsgerätes können in einem Gerät kombiniert werden. In diesem Fall erfüllt das Gerät gleichzeitig mehrere Funktionen. Zum Beispiel kann ein Gerät eine Kamera und Reinigungsbürsten haben, um in der Kombination die Funktionen: Inspektion und Reinigung gleichzeitig zu erfüllen). Ein Gerät für die Zugschnurverlegung kann ebenfalls eine Kamera haben, so dass die Kombination die Verfahrensschritte der Zugschnurverlegung und der visuellen Inspektion gleichzeitig erfüllt. Oder das Gerät für die Zugschnurverlegung umfasst zusätzlich einen Lappen und einen Indikationstreifen umfassen, so dass Zugschnurverlegung, Inspektion und Reinigung zugleich ausgeführt werden.

Die Vorschub, Inspektions- und Reinigungsgeräte können über Kabelverbindungen oder kabellose Verbindungen gesteuert werden.

Die Erfindung wird anschließend anhand der Zeichnungen beispielsweise näher erläutert. Die Zeichnungen zeigen:
- Fig. 1: ein Blockdiagramm mit dem Verlauf der Inspektion und Reinigung, womit das erfindungsgemäße Verfahren realisierbar ist;
- Fig. 2: eine Schnittansicht eines Rohrabschnittes mit einer Ausführungsform der erfindungsgemäßen Zugvorrichtung mit Propellerantrieb;
- Fig. 3: eine Schnittansicht eines Rohrabschnittes mit einer Ausführungsform der erfindungsgemäßen Zugvorrichtung;
- Fig. 4: eine Schnittansicht eines Rohrabschnittes mit einer Ausführungsform der erfindungsgemäßen Zugvorrichtung;
- Fig. 5: eine Schnittansicht eines Rohrabschnittes mit einer Ausführungsform der erfindungsgemäßen Zugvorrichtung,
- Fig. 6: eine Schnittansicht eines Rohrabschnittes mit einer Ausführungsform der erfindungsgemäßen Zugvorrichtung;

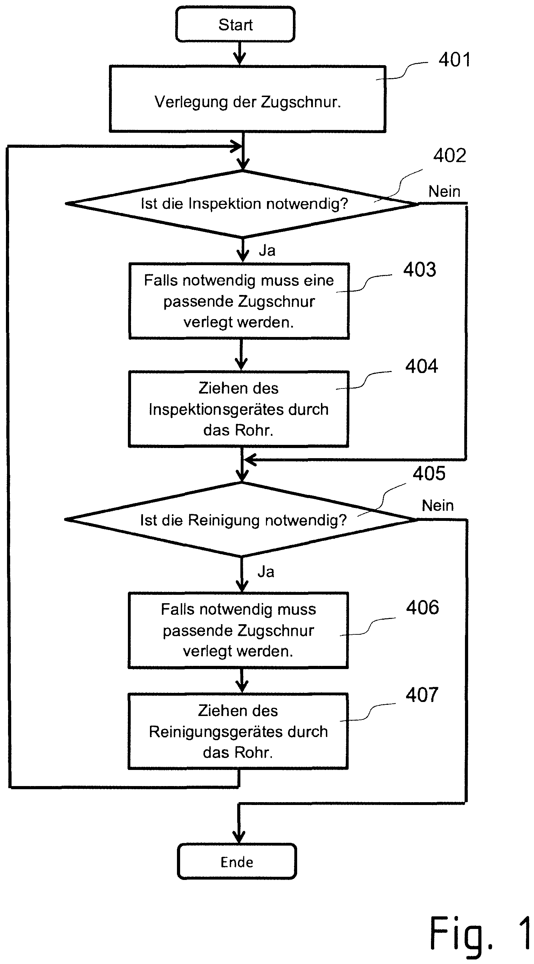

In Fig. 1 ist anhand eines Blockdiagramms der Verlauf des erfindungsgemäßen Verfahrens dargestellt.

In einem ersten Verfahrensschritt 401 wird die Zugschnur verlegt. In einem nachfolgenden Schritt 402 wird durch den Anwender entschieden, ob zu Beginn der Wartungsarbeiten eine vorherige Inspektion durchgeführt werden oder direkt zur Reinigung übergegangen werden kann.

Um die Inspektion durchzuführen, wird im Punkt 403 eine neue Zugschnur verlegt, um ausreichend Zugkraft an das Inspektionsgerät anlegen zu können. Mit Hilfe der Zugschnur wird das Inspektionsgerät durchgezogen, siehe Schritt 404. Ausgehend von dem bei der visuellen Inspektion ermittelten Rohrzustand wird beim Schritt 405 entschieden, ob eine anschließende Reinigung des Rohrs durchgeführt werden muss oder die Wartungsarbeiten abgeschlossen werden können.

Um eine Reinigung durchzuführen, muss eine ausreichend reißfeste Zugschnur verlegt sein, um ausreichend Zugkraft an die Reinigungsvorrichtung anlegen zu können. Sofern dies zuvor noch nicht geschehen ist, wird im Schritt 403 eine für die anschließende Reinigung geeignete Zugschnur eingezogen.

Mit Hilfe der Zugschnur wird dann im Schritt 407 die Reinigungsvorrichtung durch das Lüftungsrohr gezogen.

Nach der Reinigung kann der Anwender entscheiden, ob er eine zusätzliche Inspektion machen möchte, um das Reinigungsergebnis zu kontrollieren. Nach der erneuten Inspektion entscheidet der Anwender im Punkt 405 des Verfahrens, ob die Reinigung wiederholt wird oder die Wartungsarbeiten abgeschlossen werden.

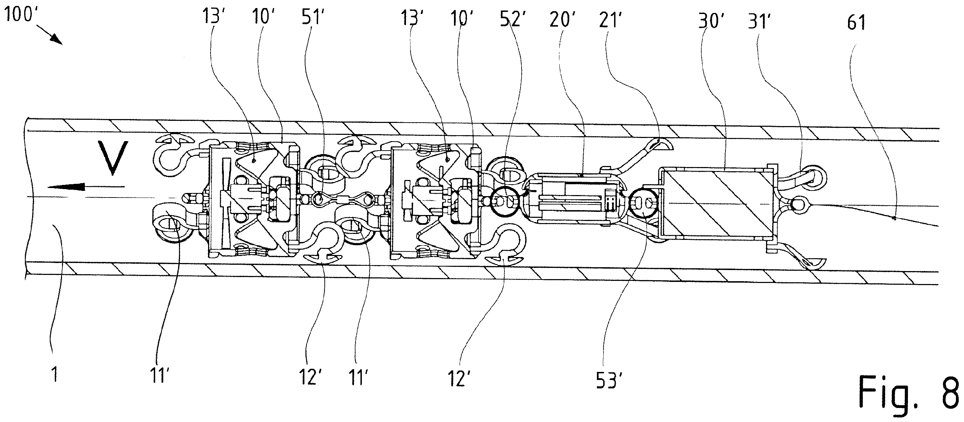

In Fig. 8 ist eine erste Ausführungsform einer erfindungsgemäßen Zugvorrichtung 100 mit zwei Antriebseinheiten 10' zu sehen, welche sich mit einer Geschwindigkeit v nach vorne bewegt. Die Zugvorrichtung 100' wird im Rohr 1 durch Führungselemente 12', 21', 31' zentral ausgerichtet. Jede Antriebseinheit 10' umfasst einen Elektromotor mit Propellern 10. Die Elektromotoren sind über ein Kabel mit einer Elektronikeinheit 20' verbunden und werden darüber gesteuert. Die Elektroeinheit 20' wird über eine kabellose Verbindung von außen gesteuert. Die Elektronikeinheit 20' ist mit einer Batterieeinheit 30' über ein Kabel verbunden und wird darüber mit elektrischer Energie versorgt. Alle Einheiten 10', 20', 30' sind mit flexiblen Gelenken 51', 52', 53' verbunden. Dadurch wird die Bogendurchgängigkeit der Zugvorrichtung 100' erhöht.

Die Zugvorrichtung 100' zieht eine Leitschnur 61 hinter sich her. Dies ist die in dem oben beschriebenen, bevorzugten Verfahrensablauf die als erste verlegte Zugschnur.

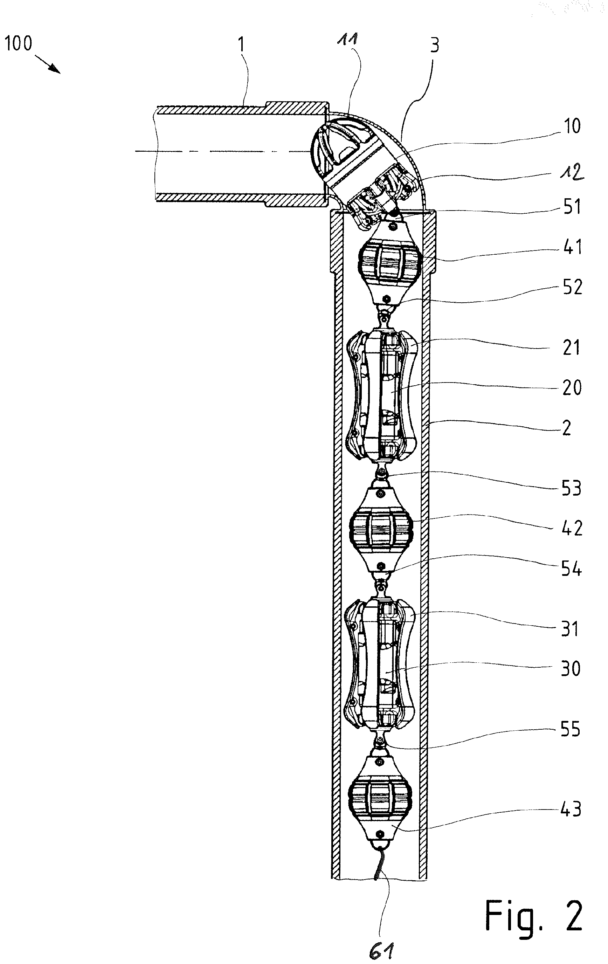

Ausbildung und Funktion einer weiteren Ausführungsform einer erfindungsgemäßen Zugvorrichtung 100, insbesondere deren gelenkige Ausbildung, werden anhand der in den Figuren 2 bis 6 dargestellten Bewegungsfolge näher erläutert.

In Figur 2 sind zwei gerade Rohre 1, 2 über einen 90°-Rohrbogen 3 miteinander verbunden. Die Zugvorrichtung 100 ist aus dem vertikal ausgerichteten Rohr 2 hochgeflogen, wobei die Antriebseinheit 10 bereits den Rohrbogen 3 erreicht hat. An der Antriebseinheit 10 sind an der Vorderseite mehrere bogenförmige Streben ausgebildet, die in der seitlichen Ansicht eine Halbkreisform einnehmen. Dadurch kann die Antriebseinheit 10 gut der Kontur des Rohrbogens 3 folgen ohne zu verkanten. Am hinteren Ende wird die Antriebseinheit 10 durch die federnd ausgebildete Abstandshalterelemente 12 an der Rohrwandung abgestützt.

Die Antriebseinheit 10 schleppt stets den restlichen Gliederzug hinter sich her. Dazu ist sie an einem Gelenkpunkt 51 mit einem Gelenkelement 41 verbunden. Das Gelenkelement 41 hat in seitlicher Ansicht eine leicht gestreckte Kontur, etwa einem Football entsprechend. Mit dem Bauch liegen Mittelteil und den konisch zulaufenden Enden hat der Körper zudem die Ähnlichkeit mit einem Bootsfender. Der Durchmesser der Gelenkeinheit 41 ist gegenüber der Antriebseinheit 10 und gegenüber dem Innendurchmesser der Rohrleitung zwei reduziert.

An die Gelenkeinheit 41 ist an einem weiteren Gelenkpunkt 52 eine Elektronikeinheit 20 angehängt, die über ihren Außenumfang verteilt mehrere Gleitkufen 21 aufweist. Bedingt durch die Form der Gleitkufen 21 ergibt sich in der Seitenansicht der Elektronikeinheit 20 eine leichte Knochenform mit größeren Enden und einer Taille im zentralen Mittelteil. An die Elektronikeinheit 20 schließt sich an einem weiteren Gelenkpunkt 53 eine weitere Gelenkeinheit 42 an, die gleichartig zu der ersten Gelenkeinheit 41 ausgebildet ist.

Über den Gelenkpunkt 54 schließt sich eine Energieversorgungseinheit 30 an, die wiederum mehrere Gleitkufen 31 besitzt und hinsichtlich des mechanischen, äußeren Aufbaus mit der Elektronikeinheit 20 korrespondiert. Über einen Gelenkpunkt 55 ist eine dritte Gelenkeinheit 43 angehängt, die das Ende des Gliederzuges bildet und zugleich mit der freien Öse an ihrem Ende eine Befestigungsmöglichkeit für eine Zugschnur oder Leitschnur 61 bildet.

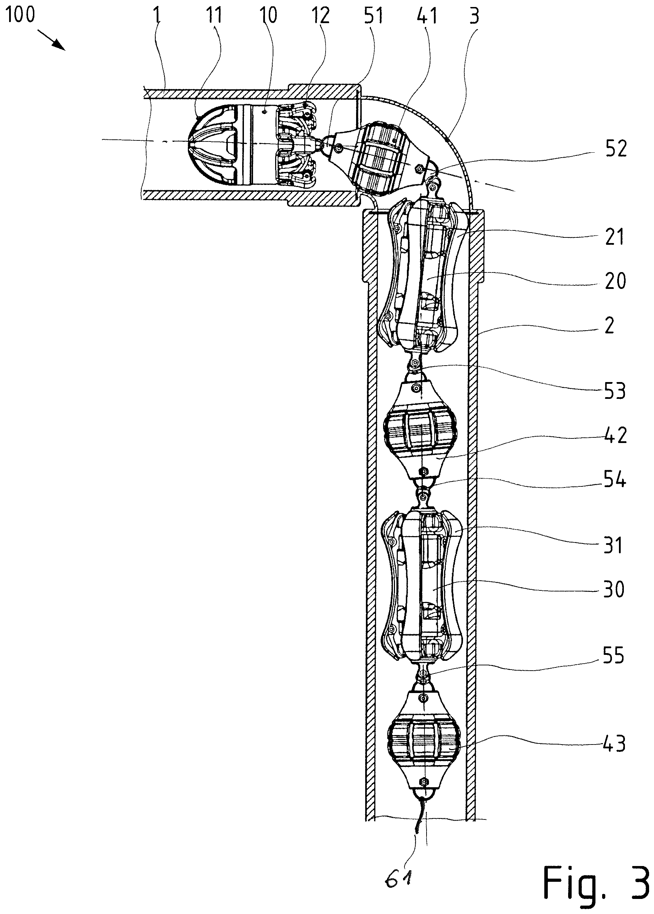

In der Stellung gemäß Figur 3 hat die Antriebseinheit 10 den Rohrbogen 3 vollständig durchlaufen und setzt ihren Flug durch den Rohrabschnitt 1 fort. Die Gelenkeinheit 41 befindet sich überwiegend innerhalb des Rohrbogens 3. Erwähnenswert ist an dieser Stelle, dass Länge und Durchmesser der Gelenkeinheit 41 speziell aufeinander abgestimmt sind. Einerseits ist die Länge so kurz wie möglich gewählt, sodass die Gelenkeinheit 41 problemlos, ohne Berührung an mehr als einer Stelle innerhalb der Rohrleitung durch den Rohrbogen 3 gelangen kann. Dazu ist das Verhältnis von Länge zu Durchmesser insbesondere auf maximal 1,5 : 1 begrenzt. Auf der anderen Seite ist der Abstand zwischen den Gelenkpunkten 51, 52 an der Gelenkeinheit 41 größer als deren Durchmesser. Dadurch wird der in Figur 3 gut erkennbare Effekt erreicht, dass der Gelenkpunkt 52 zunächst von der Rohrmitte nach außen abgelenkt wird, sodass das nachfolgende Element, in diesem Fall die Elektronikeinheit 20, gleich eine passende Vorpositionierung erfährt, um in den Rohrbogen 3 einzutauchen.

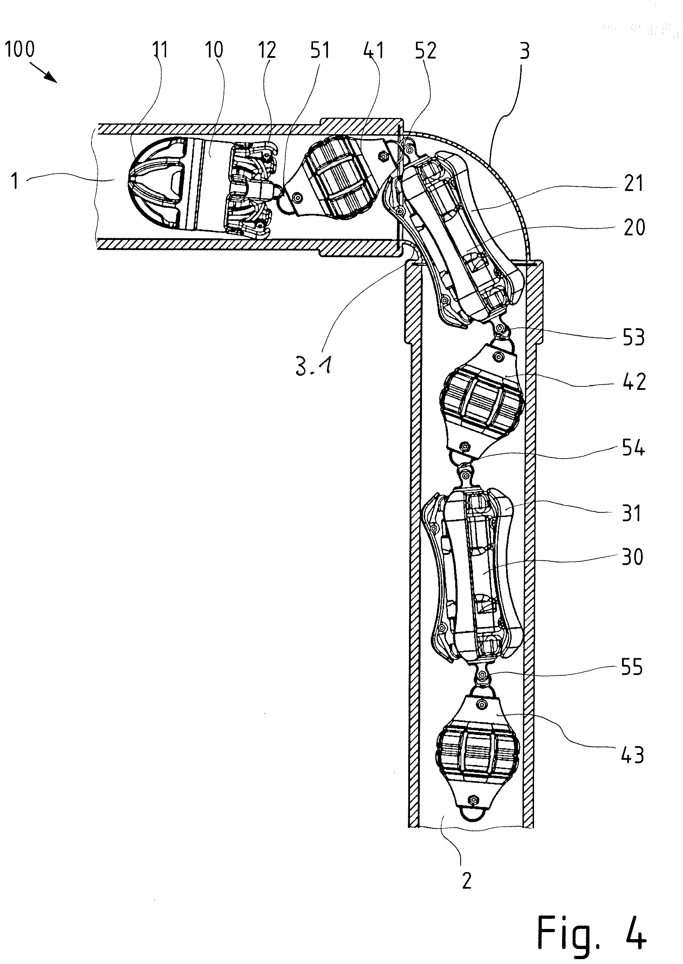

In Figur 4 ist die Elektronikeinheit 20 vollständig innerhalb des Rohrbogens 3. Die Taillierung in der Mitte erleichtert, die Elektronikeinheit 20 um den engen Innenradius 3.1 herum zu führen. Die Gelenkeinheit 41 befindet in dieser Position mit ihrem Gelenkpunkt 52 nahezu an der äußeren Rohrwand, sodass sich eine größere Schrägstellung ergibt. Hierdurch ergibt sich ein günstiger Kraftangriffspunkt für die Elektronikeinheit 20, um diese durch den engen Rohrabschnitt 3 hindurch zu ziehen. Ein Kraftangriffspunkt, der auf der jeweiligen Rohrmittelachse liegen würde, würde hier möglicherweise zur Blockade führen, weil eine achsparallele Kraftausrichtung dazu führen würde, dass die Funktionseinheit 20 an den Rohrinnenbogen 3.1 gedrückt wird, jedoch nicht um ihn herum.

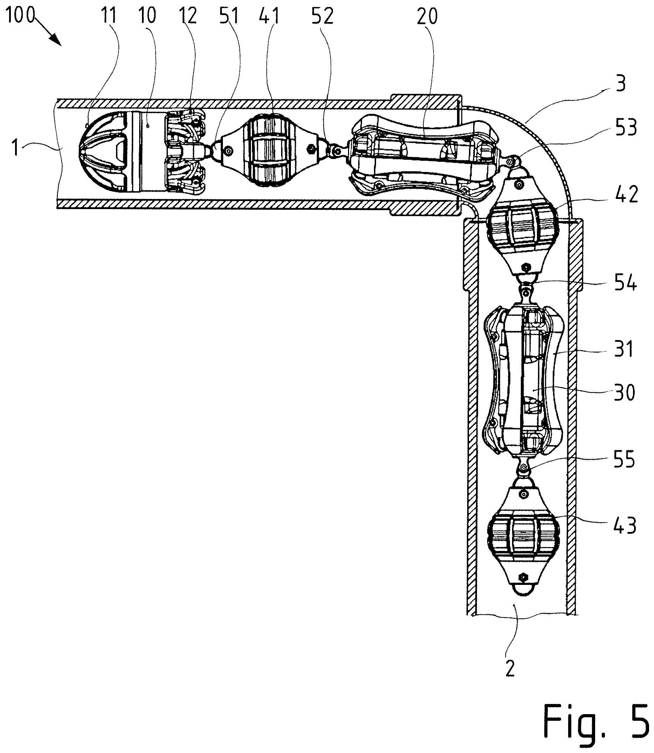

In Figur 5 hat die Funktionseinheit 20 mit ihrem überwiegenden Teil den Rohrbogen 3 passiert und setzt den Weg weiter im Lüftungsrohr 1 fort.

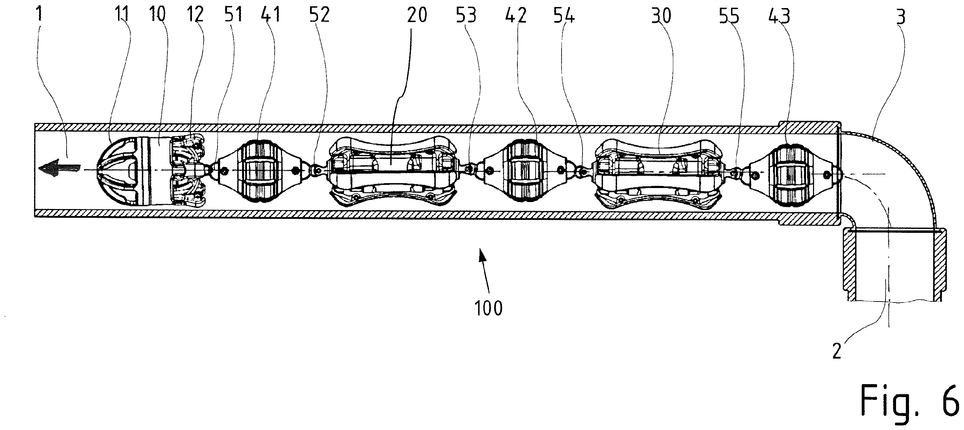

In Figur 6 ist der komplette Gliederzug, der die Zugvorrichtung 100 bildet, aus dem vertikalen Lüftungsrohr 2 und dem sich anschließenden Rohrbogen 3 heraus gelangt und hat wieder eine lineare Erstreckung innerhalb des horizontalen Lüftungsrohrs 1 angenommen, bei der alle Funktionseinheiten 10, 20,30 mit den dazwischen eingesetzten Gelenkeinheiten 41, 42, 43 in Reihe liegen, wobei sich die jeweiligen Gelenkpunkte 51, 52, 53, 54, 55 auf einer Rohrmittelachse befinden.

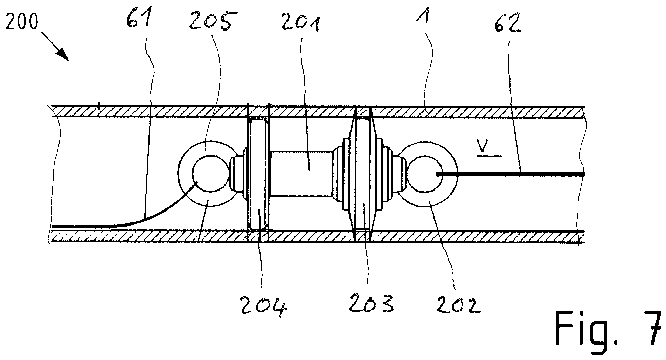

Figur 7 zeigt eine Reinigungsvorrichtung 200, die durch das Lüftungsrohr 1 gezogen wird. Diese umfasst einen Grundkörper 201 mit zwei Ösen 202, 205 und zwei Reinigungsscheiben 203, 204. Diese bestehen aus einem leicht verformbaren Material, wie beispielsweise Schaumstoff. Auch die Ausbildung als Bürstenkörper ist möglich, sodass einerseits die Verformung gewährleistet ist, um die Reinigungsvorrichtung 200 durch Engstellen innerhalb der Lüftungsrohrleitung hindurch zu ziehen, und andererseits die elastische Rückstellkraft groß genug ist, damit sich die Reinigungsscheiben 203, 204 an die Innenwandung des Lüftungsrohrs 1 anlegen, um dort befindlichen Schmutz aufzunehmen oder zu lösen.

An der Öse 202 ist eine Zugschnur 62 befestigt, über die von einem Bediener, der an einem Ende der Lüftungsrohrleitung positioniert ist, starke Zugkräfte ausgeübt werden können. An der rückwärtigen Öse 205 ist die wesentlich dünnere Leitschnur 61 befestigt, die im vorhergehenden Arbeitsgang über die Zugvorrichtung 100 in das Rohrlüftungssystem eingezogen worden ist. Dadurch, dass die Leitschnur 61 beim Reinigungs-Arbeitsgang nachgeschleppt wird, kann sich direkt ein weiterer Arbeitsgang anschließen, in dem über die Leitschnur 61 die Zugschnur 62 zurückgeholt wird. Dazu wird am Leitungsende die Reinigungsvorrichtung entnommen, und Leit- und Zugschnüre werden miteinander verbunden. Es ist dann kein weiterer Flug der Zugvorrichtung 100 erforderlich, um die Leitschnur 61 erneut in die Lüftungsrohrleitung einzubringen.

Sollte die Reinigungsvorrichtung 200 festsitzen, kann es über die Leitschnur 61 zurückgezogen werden. Die Reißfestigkeit der Leitschnur 61 kann bei Verwendung z. B. von Leinen auf Basis von UHW-PE-Fasern für einen solchen Notfall ausreichend sein, jedoch wird in der Regel für die Arbeitslasten eine Zugschnur mit größerem Durchmesser und entsprechend größerer Auflagefläche eingesetzt.

## Patentansprüche

1. Verfahren zur Reinigung und/oder Inspektion von geraden und gebogenen Lüftungsrohrleitungen (1, 2, 3) von Lüftungs- oder Klimaanlagen, mit wenigstens folgenden Schritten:
a) Bereitstellung und Festlegung wenigstens einer Zugschnur (62) an einem Rohrende;
b) Durchziehen der Zugschnur (62) durch die Lüftungsrohrleitung (1, 2, 3) bis zu dem jeweils anderen Rohrende, unter Verwendung einer Zugvorrichtung (100; 100') mit wenigstens einer Vortriebseinheit (10), wobei die Lüftungsrohrleitung (1, 2, 3) von der Zugvorrichtung (100; 100') durchquert wird und die Zugschnur (62) nachgeschleppt wird;
c) Entnahme der Zugvorrichtung aus der Lüftungsrohrleitung (1, 2, 3) und Verbinden der Zugschnur (62) mit einer Reinigungsvorrichtung (200) mit wenigstens einem Reinigungskörper (203, 204) an dem als Startpunkt gewählten Rohrende;
d) Zurückziehen der mit der Reinigungsvorrichtung (200) verbundenen Zugschnur (62) vom Startpunkt aus bis zum jeweils anderen Rohrende.

2. Verfahren nach Anspruch 1, **dadurch gekennzeichnet, dass** die Reinigung oder Inspektion in einer Lüftungsrohrleitung (1, 2, 3) mit Kreisquerschnitt mit einem Innendurchmesser kleiner oder gleich 100 mm durchgeführt wird.

3. Verfahren nach Anspruch 1 oder 2, **dadurch gekennzeichnet, dass** die Zugvorrichtung (100; 100') auf den Innendurchmesser der zu reinigenden oder zu inspizierenden Lüftungsrohrleitung (1, 2, 3) derart angepasst ist, dass der Durchmesser der Vortriebseinheit (10) 80% bis 95% des Innendurchmessers der Lüftungsrohrleitung (1, 2, 3) beträgt.

4. Verfahren nach einem der Ansprüche 1 bis 3, **dadurch gekennzeichnet, dass** mittels der Zugvorrichtung (100; 100') eine visuelle Inspektion der Innenwandung der Lüftungsrohrleitung (1, 2, 3) und/oder eine gyroskopische Messung zur Ermittlung des dreidimensionalen Verlaufs der Lüftungsrohrleitung (1, 2, 3) durchgeführt wird.

5. Verfahren nach wenigstens einem der vorhergehenden Ansprüche, **dadurch gekennzeichnet, dass** die Zugvorrichtung (100; 100') als eine propellergetriebene Flugvorrichtung ausgebildet ist, wobei die Lüftungsrohrleitung (1, 2, 3) von der Zugvorrichtung durchgeflogen wird und die Zugschnur (62) im Durchflug nachgeschleppt wird;

6. Verfahren nach Anspruch 5, **dadurch gekennzeichnet, dass** im Schritt b) mit der Zugvorrichtung (100; 100') zunächst eine leichte Zugschnur als Leitschnur (61) in die Lüftungsrohrleitung (1, 2, 3) eingezogen wird und nachfolgend eine schwere Zugschnur (62) mit der Leitschnur (61) verbunden wird, welche bis zu dem Ausgangspunkt zurückgezogen wird, wo die schwere Zugschnur (62) im Schritt c) mit der Reinigungsvorrichtung (200) verbunden wird.

7. Verfahren nach Anspruch 5 oder 6, **dadurch gekennzeichnet, dass** die Zugvorrichtung (100; 100') am Startpunkt in die Lüftungsrohrleitung (1, 2, 3) eingesetzt wird und vor dem Start der Zugvorrichtung (100; 100') der Querschnitt der Lüftungsrohrleitung (1, 2, 3) hinter der eingesetzten Zugvorrichtung (100; 100') verschlossen wird.

8. Verfahren nach einem Ansprüche 5 bis 7, **dadurch gekennzeichnet, dass** die Zugvorrichtung (100; 100') an wenigstens einer Position innerhalb der Lüftungsrohrleitung (1, 2, 3) mit Hilfe der Leit- und/oder Zugschnur (61, 62) stationär gehalten wird und mittels des an der Vortriebseinheit (10) erzeugten Luftstroms Verschmutzungen von der Rohrinnenwand beseitigt werden.

9. Zugvorrichtung (100; 100') zum Durchqueren einer Lüftungsrohrleitung (1, 2, 3) zu Reinigungs- und Inspektionszwecken und zur Durchführung des Verfahrens nach wenigstens einem der vorhergehenden Ansprüche, mit wenigstens einer Vortriebseinheit (10) mit wenigstens einem Motor und mit einer Energieversorgungseinheit (30) als Funktionseinheiten;
**dadurch gekennzeichnet, dass** die Funktionseinheiten (10, 30) gelenkig miteinander verbunden sind und einen Gliederzug ausbilden, wobei die Vortriebseinheit (10) an der Spitze des Gliederzugs angeordnet ist und wobei alle gelenkig miteinander verbundenen Elemente des Gliederzugs zumindest an ihrer Vorderseite abgerundet sind.

10. Zugvorrichtung (100; 100') nach Anspruch 9, **gekennzeichnet durch** eine Elektronikeinheit (20) als weitere Funktionseinheit.

11. Zugvorrichtung (100; 100') nach Anspruch 9 oder 10, **dadurch gekennzeichnet, dass** die Funktionseinheiten (10, 20, 30) über Gelenkeinheiten (41, 42, 43) gelenkig miteinander verbunden sind, welche Gelenkeinheiten (41, 42, 43) in Form einer Kugel, eines Bootsfenders oder eines Footballs gestaltet sind und einen zumindest gegenüber der Vortriebseinheit (10) reduzierten Durchmesser besitzen, wobei das Verhältnis von Länge zu Durchmesser bei den Gelenkeinheiten (41, 42, 43) kleiner 1,5 : 1 ist.

12. Zugvorrichtung (100; 100') nach einem der vorhergehenden Ansprüche 9 bis 11, **dadurch gekennzeichnet, dass** wenigstens eine Funktionseinheit (20, 30), deren Verhältnis von Länge zu Durchmesser größer als 1,5 : 1 ist, in einem zentralen Bereich tailliert ist.

13. Zugvorrichtung (100; 100') nach einem der vorhergehenden Ansprüche 9 bis 12, **dadurch gekennzeichnet, dass** wenigstens eine Funktionseinheit (20, 30) mehrere sich in Längsrichtung erstreckende und über den Außenumfang verteilte Gleitschienen (21, 31) aufweist.

14. Zugvorrichtung (100; 100') nach einem der vorhergehenden Ansprüche 9 bis 13, **dadurch gekennzeichnet, dass** wenigstens eine Vortriebseinheit (10) wenigstens einen Propeller und einen Motor umfasst.
